(19) Europäisches Patentamt

European Patent Office

Office européen des brevets

(11) **EP 1 142 665 B1**

(12) **EUROPÄISCHE PATENTSCHRIFT**

| | |
|---|---|
| (45) Veröffentlichungstag und Bekanntmachung des Hinweises auf die Patenterteilung:<br>**06.10.2004   Patentblatt 2004/41** | (51) Int Cl.⁷: **B23K 9/10**, B23K 9/095 |

(21) Anmeldenummer: **01107994.4**

(22) Anmeldetag: **29.03.2001**

(54) **Lichtbogenschweissgerät**

Arc welding machine

Appareil de soudage à l'arc

(84) Benannte Vertragsstaaten:
**DE FR IT**

(30) Priorität: **05.04.2000   DE 10016914**

(43) Veröffentlichungstag der Anmeldung:
**10.10.2001   Patentblatt 2001/41**

(73) Patentinhaber: **EWM Hightec Welding GmbH**
**56271 Mündersbach (DE)**

(72) Erfinder: **Szczesny, Michael**
**56235 Ransbach-Baumbach (DE)**

(74) Vertreter: **COHAUSZ & FLORACK**
**Patent- und Rechtsanwälte**
**Bleichstrasse 14**
**40211 Düsseldorf (DE)**

(56) Entgegenhaltungen:
**EP-A- 0 644 011          US-A- 5 225 660**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**EP 1 142 665 B1**

**Beschreibung**

Die Erfindung betrifft ein Lichtbogenschweißgerät, welches sowohl zum Gleich- als auch zum Wechselstromschweißen geeignet ist. Ein gattungsgemässes Gerät bzw. Verfahren ist in der US-A-5 225 660 offenbart.

Aus der europäischen Patentschrift 0 326 681 ist ein Lichtbogenschweißgerät für Gleich- und Wech-selstromspeisung bekannt, welches einen netzspan-nungsgespeisten Gleichrichter, einen über einen Zwischenkreis daran angeschlossenen Stromwandler, der über eine primärseitige Steuereinrichtung getaktet ist und ferner einen sekundärseitigen Gleichrichter enthält, dem ein Glättungsglied und ein Freilaufkreis zugeordnet sind. Im Sekundärkreis ist eine Umschalteinrichtung vorgesehen, in deren erster Stellung die sekundärseitig ausgebildeten Strompfade gemeinsam mit einem Anschluß der Schweißelektrode zur Herstellung eines Gleichstrombetriebs und in dessen zweiter Stellung der eine Stromkreis mit dem einen Anschluß und der andere Stromkreis mit einem anderen Anschluß verbunden sind, derart, daß ein Wechselstrombetrieb ermöglicht wird.

Aus dem deutschen Patent 40 06 203 ist es bekannt, zum Zwecke der Reduzierung der Geräuschentwicklung beim Lichtbogenschweißen den Sollwert des Schweißstromes mit einer zeitveränderlichen Größe zu multiplizieren, indem die Flanken des rechteckförmigen Strom-Sollwertverlaufs nach einer nichtlinearen Funktion "abgerundet" werden.

Aus der DE 40 23 419 C2 ist ein Lichtbogenschweißgerät mit einem netzspannungsgespeisten Gleichrichter, einem primärseitig getakteten Stromwandler und einem sekundärseitig ansteuerbaren Wechselrichter bekannt, welches einen Stromregelkreis enthält, dem der Strom-Istwert zugeführt wird und welcher über eine Impulsbreitensteuerschaltung auf die primärseitige Steuereinrichtung des Stromwandlers einwirkt. Bei dieser Vorrichtung wird der Stromverlauf, der in den Schweißprozeß fließt, durch einen sekundärseitigen Wechselrichter derart beeinflußt, daß sowohl das Periodenverhältnis (Balance) als auch die Frequenz des Schweißwechselstromes variierbar sind.

Bei den bekannten Lichtbogenschweißgeräten erfolgt während jeder Periode des Schweißstromes aufgrund der endlichen Flankensteilheit bzw. der abgerundeten Flanken eine Abweichung vom rechteckförmigen Stromverlauf. Dadurch ändert sich beim Verändern der Wechselrichterfrequenz der Mittelwert des Schweißstroms.

Der Erfindung liegt davon ausgehend die Aufgabe zugrunde, eine Vorrichtung bzw. ein Verfahren zum Wechselstromschweißen dahin weiter zu entwik-keln, daß unter Erhaltung des Vorteils der beliebigen Vorgabe des Strom-Sollwertprofils die oben genannte Auswirkung der Veränderungen der Wechselrichterfrequenz vermieden wird.

Diese Aufgabe wird durch ein Lichtbogenschweißgerät mit den Merkmalen des Anspruchs 1 gelöst.

Die Erfindung zeichnet sich dadurch aus, daß diejenigen Flächenbereiche, die aufgrund der endlichen Flankensteilheit vom idealen Rechteckverlauf abweichen, durch die Strom-Sollwert-Korrektureinrichtung dahingehend ergänzt werden, daß der verlorene "Flächeninhalt" durch die Aufsattelung desselben auf die waagerechten Stromprofilverläufe ergänzt wird. Insgesamt ergibt sich damit auch beim abgerundeten Stromverlauf ein Flächenintegral, welches dem Rechteckverlauf mit der Amplitude des Sollwertes entspricht. Die Amplitude des zeitlichen Stromverlaufs $i_1(t)$ bzw. $i_2(t)$ wird also solange korrigiert, bis der Mittelwert des Stroms dem vorgegebenen Sollwert entspricht, und zwar jeweils unabhängig von Frequenz und Kurvenform.

Die Korrekturgröße für den Sollwert wird dabei nach einer ersten bevorzugten Ausführungsform der Erfindung dadurch gewonnen, daß zur Erzeugung der Korrekturgröße ($I_{Korr}$) ein mit der Stromformvorgabe-schaltung verbundener Funktionsgenerator vorgese-hen ist, welcher in Abhängigkeit von der vorgewählten Stromform und/oder der vorgewählten Wechselrichterfrequenz die Korrekturgröße ($I_{Korr}$) liefert. Bei dieser Variante wird arithmetisch aus der vorgegebenen Wechselstromform zu jedem Zeitpunkt das fehlende Flächenelement berechnet und als entsprechende Korrekturgröße zum Sollwert hinzuaddiert. Je nach verwendeter Stromform (trapezförmig, sinusförmig, dreieckförmig) ergibt sich eine entsprechend angepaßte Korrekturfunktion.

Nach einem zweiten bevorzugten Ausführungsbeispiel der Erfindung erfolgt die Ermittlung des Korrekturwertes entweder dadurch, daß die Korrekturgröße aus einem weiteren Regelkreis erzeugt wird, der als Sollwertvorgabe den Sollwert des Schweißstromes und als Istwert den mit einem Mittelwertbildner erzeug-ten Mittelwert des Schweißstromes ($i_1(t)$ und/oder $i_2(t)$) erhält oder dadurch, daß die Korrekturgröße aus einem weiteren Regelkreis erzeugt wird, der als Sollwertvorgabe den Sollwert des Schweißstromes und als Istwert den mit einem Mittelwertbildner erzeugten Mittelwert einer modifizierten Sollwertvorgabe ($I_{mod}$) am Eingang des Stromregelkreises erhält.

Dabei kann als Mittelwert sowohl der arithmetische Mittelwert als auch der quadratische Mittelwert (Effektivwert) des Schweißstroms in vorteilhafter Weise verwendet werden.

Der Abgriff des Istwertes des Schweißstromes auf der Sekundärseite kann sowohl vor dem Wechselrichter als auch nach dem Wechselrichter, also als unmittelbar in den Schweißprozeß fließender Schweißstrom, erfolgen.

Weitere bevorzugte Ausführungsformen gehen aus den übrigen Unteransprüchen hervor.

Die Erfindung wird im folgenden anhand von Ausführungsbeispielen, die in den Zeichnungen dargestellt sind, näher erläutert. Dabei zeigen

Fig. 1 den Aufbau eines Lichtbogenschweißgerätes, wie es aus dem Stand der Technik bekannt ist.

Fig. 2a den Aufbau eines Lichtbogenschweißgerätes gemäß einer ersten Variante der Erfindung,

Fig. 2b den Aufbau eines Lichtbogenschweißgerätes gemäß einer zweiten Variante und

Fig. 2c den Aufbau eines Lichtbogenschweißgerätes gemäß einer dritten Variante und

Fig. 3 den Aufbau eines Lichtbogenschweißgerätes gemäß einer vierten Variante,

Fig. 4a bis 4c zeitliche Stromverläufe zur Erläuterung der erfindungsgemäßen Funktionsweise.

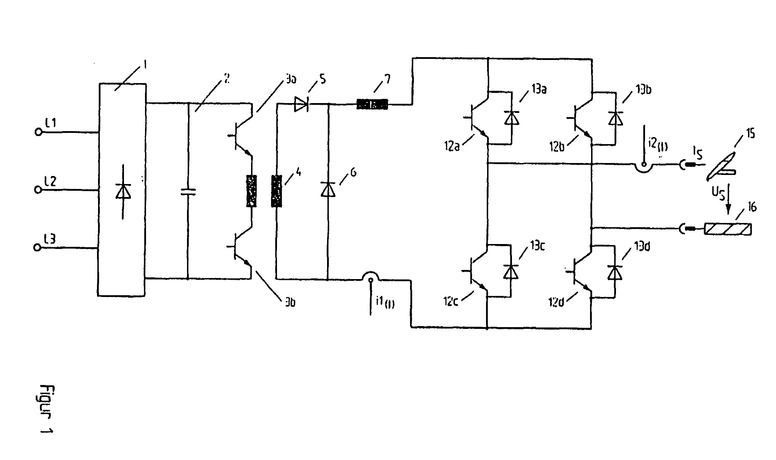

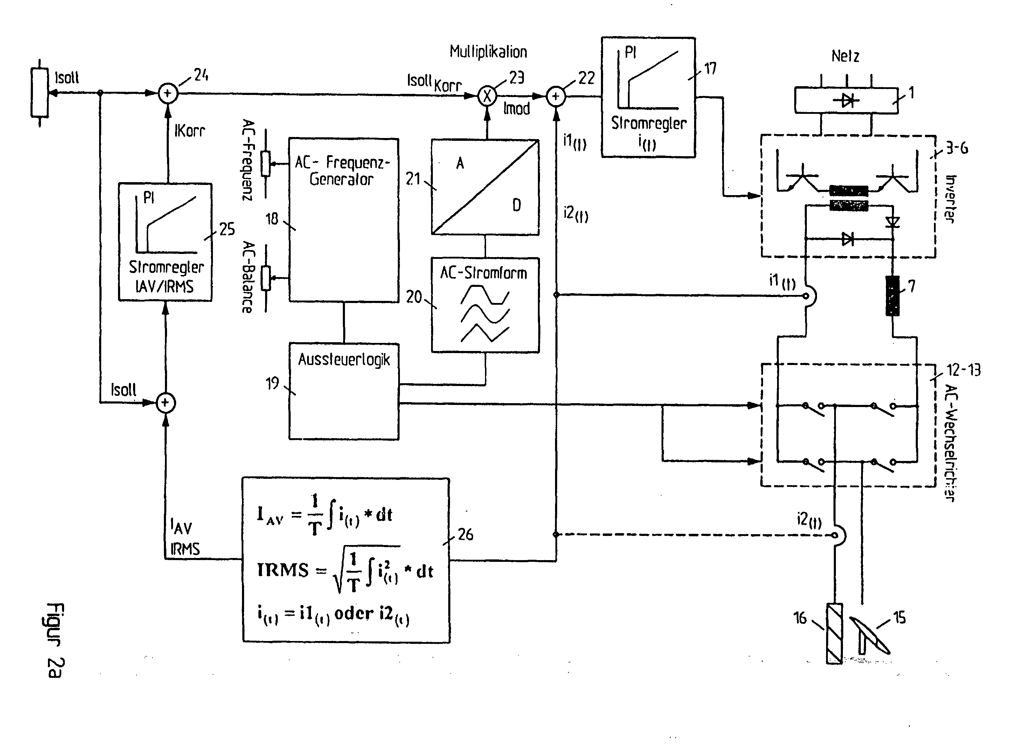

Fig. 1 zeigt ein Blockschaltbild eines Lichtbogenschweißgerätes. Über einen Gleichrichter 1 wird die von einem beispielsweise dreiphasigen Netz L1, L2, L3 entnommene Netzspannung gleichgerichtet und über einen Zwischenkreis 2 auf eine primärseitige Steuereinrichtung 3a, 3b geführt, welche die Primärwicklung eines Stromwandlers 4 taktet. Sekundärseitig des Stromwandlers 4 ist ein Gleichrichter 5 angeordnet, in dem die sekundärseitige Schweißspannung gleichgerichtet wird und über eine Glättungsdrossel 7 geglättet wird. Nachgeordnet ist ein Wechselrichter 12, 13 vorgesehen, welcher aus vier steuerbaren Schaltern besteht, die in Brückenschaltung angeordnet sind. Am Ausgang des Wechselrichters 12 ist der Schweißprozeß 15, 16 angeschlossen. Der Wechselrichter ist mit Freilaufdioden 13a bis 13d zur Führung des Stroms während der jeweiligen nichtstromführenden Phasen des Wechselrichters dienen. Der in den Schweißprozeß 15, 16 fließende Schweißstrom ist als i2(t) bezeichnet eingetragen und der in den Wechselrichter 12 fließende Schweißstrom mit i1(t). Über die Diode 6 ist ein Freilaufkreis für den Sekundärstrom ausgebildet.

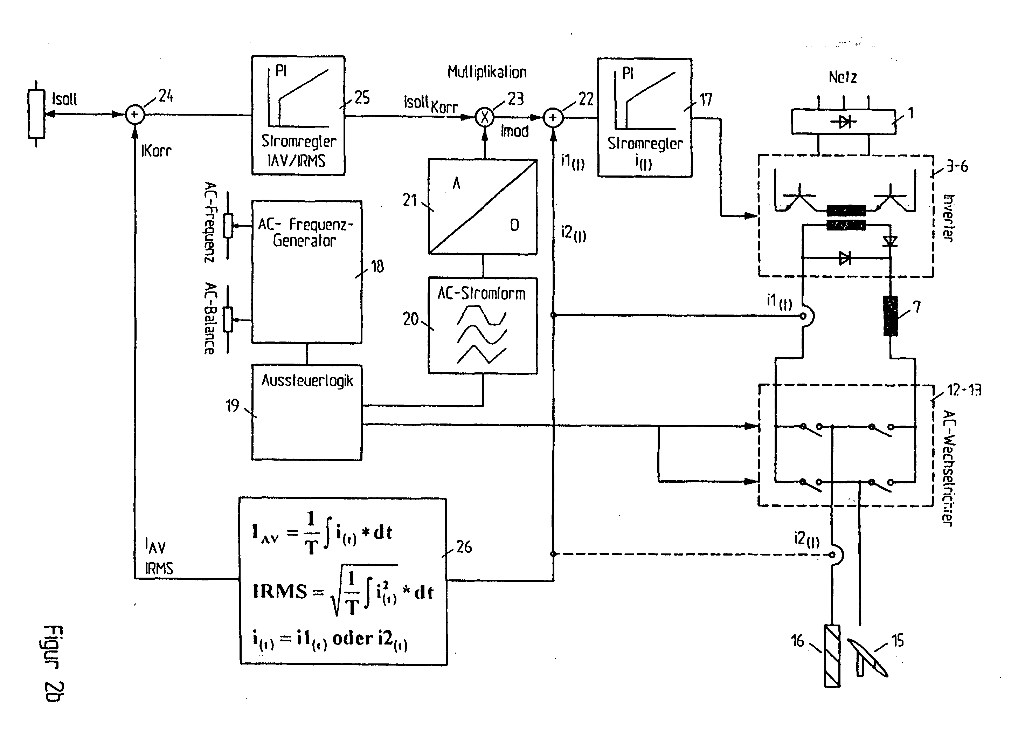

Fig. 2a zeigt die Anordnung eines Lichtbogenschweißgerätes nach einem ersten Ausführungsbeispiel der Erfindung. Im rechten Teil der Figur ist die in Fig. 1 dargestellte Schaltung skizziert. Darüber hinaus ist ein Stromregelkreis vorgesehen, welcher als Eingangsgrößen entweder den Schweißstrom i1(t) und/ oder den Schweißstrom i2(t) erhält, und der über einen Stromregler (PI-Regler) 17 auf die primärseitige Steuereinrichtung 3a, 3b einwirkt. Am Summationspunkt 22 vor dem Stromregler 17 wird der Strom-Istwert $i_1(t)$ bzw. $i_2(t)$ mit einem modifizierten Strom-Sollwert $I_{mod}$ verglichen, welcher von einem Strom-Sollwertgeber $I_{soll}$ stammt. Der ursprünglich vom Strom-Sollwertgeber $I_{soll}$ für die Amplitude des Stroms vorgegebene Wert wird zunächst an einem summationspunkt 24 in einer noch zu beschreibenden Weise mit einem Korrekturwert $I_{Korr}$ verknüpft und ferner an einem Multiplikationspunkt 23 mit einem aus einer Stromformvorgabeschaltung 18, 19, 20, 21 gewonnenen Wert multipliziert, so daß sich der modifizierte Sollwert $I_{mod}$ ergibt.

Die Stromformvorgabeschaltung besteht aus einem Wechselstromfrequenzgenerator 18, mit dem sowohl die Wechselstromfrequenz als auch die Wechselstrombalance, d.h. das Verhältnis aus der Breite der positiven Anteile zur Breite der negativen Anteile eines Rechtecksignals, vorgebbar sind. Das am Ausgang des Wechselstromfrequenzgenerators 18 generierte Rechtecksignal wird über eine Aussteuerlogik 19 sowohl auf den sekundärseitigen Wechselrichter 12, 13 als auch auf eine Kurvenverlaufsformschaltung 20 gegeben, an deren Ausgang das zeitliche Profil des vorgegebenen Stromverlaufs festliegt. Es kann sich bei der von der Schaltung 20 erzeugten Kurvenform um einen zeitlichen Stromverlauf handeln, welcher z.B. trapezförmig, sinusförmig oder dreieckförmig ist, wobei sowohl Frequenz als auch Balance dieses Stromverlaufs variabel, d.h. durch die Schaltung 18 einstellbar, sind. Das in der Schaltung 20 erzeugte Signal wird im Wandler 21 digital/ analog gewandelt und auf den Multiplikationspunkt 23 gegeben.

Erfindungsgemäß ist der Strom-Sollwertgeber über den Summationspunkt 24 additiv mit einer Strom-Sollwert-Korrekturgröße IKorr verknüpft, welche in einer im folgenden dargestellten Weise gewonnen wird:

Aus dem Istwert des Schweißstromes, entweder vor ($i_1(t)$) oder nach ($i_2(t)$) dem Wechselrichter 12, 13 gemessen, wird über eine Strommittelwertbildnerschaltung 26 entweder der arithmetische Mittelwert IAV des Schweißstromes oder der Effektivwert IRMS des Schweißstromes gebildet.

Die Berechnung des arithmetischen Mittelwertes erfolgt nach der bekannten Formel

$$IAV = \frac{1}{T} \int i(t)\,dt \,.$$

Der Effektivwert des Schweißstroms wird nach der bekannten Formel gebildet

$$IRMS = \sqrt{\frac{1}{T} \int i^2(t)\,dt} \,.$$

Somit steht am Ausgang der Mittelwertbildnerschaltung 26 eine feste Größe IAV oder IRMS zur Verfügung, welche über einen weiteren Stromregler 25 am Summationspunkt 24 zur Verknüpfung dieser Korrekturgröße IKorr mit dem Sollwert Isoll vorliegt.

Das in Fig. 2b dargestellte Ausführungsbeispiel der Erfindung unterscheidet sich von demjenigen nach Fig. 2a lediglich dadurch, daß die aus dem Ausgang der Strom-Mittelwertbildnerschaltung 26 gewonnene Korrekturgröße IKorr direkt auf den weiteren Summationspunkt 24 additiv zu dem Sollwert Isoll gegeben wird und der weitere Stromregler 25 dem weiteren Summationspunkt 24 nachgeordnet ist. Beide Lösungen nach Fig. 2a oder 2b sind schaltungstechnisch äquivalent.

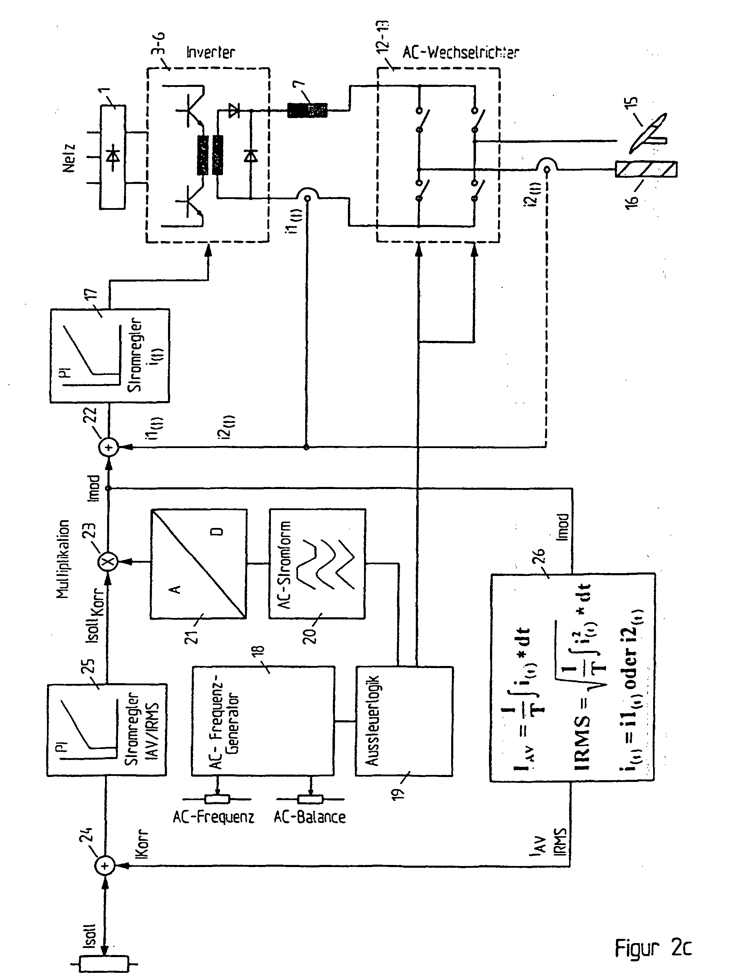

Das in Fig. 2c dargestellte Ausführungsbeispiel unterscheidet sich von denjenigen nach den Fig. 2a und 2b dadurch, daß am Eingang des Mittelwertbildners 26 nicht ein gemessener Stromwert, sondern der modifizierte Sollwert $I_{mod}$ anliegt, der vom Eingang des Summationspunktes 22 stammt. Im übrigen sind die Schaltungen äquivalent, da im ausgeregelten Zustand des Stromreglers 17 die Werte $i_1(t)/i_2(t)$ mit dem modifizierten Sollwert $I_{mod}$ übereinstimmen.

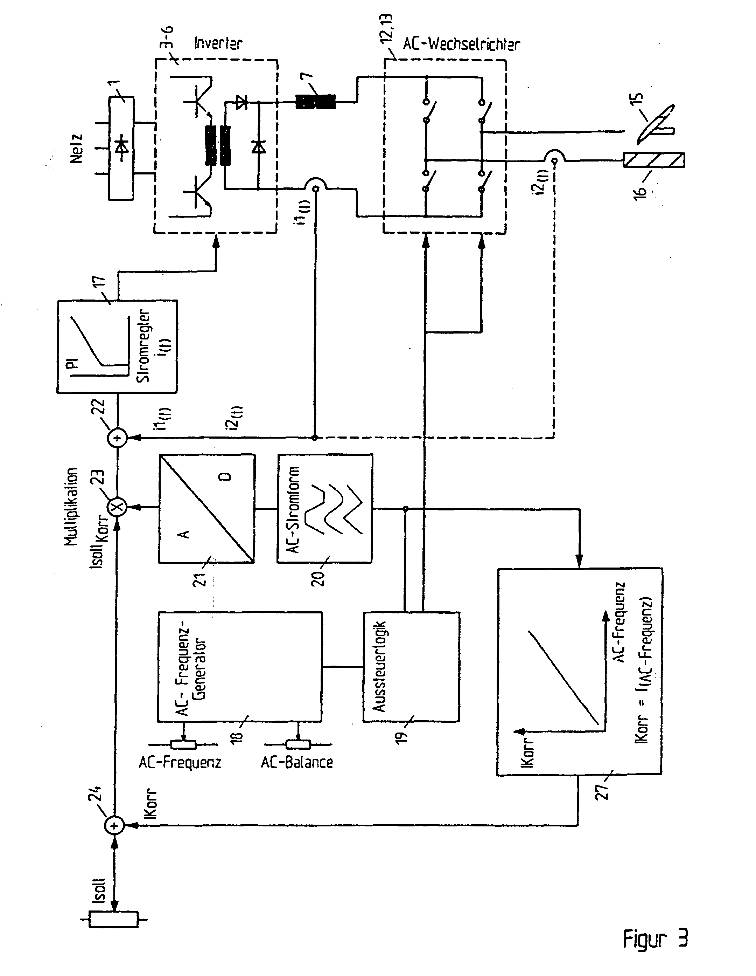

Das in Fig. 3 dargestellte dritte Ausführungsbeispiel der Erfindung unterscheidet sich von denjenigen der Fig. 2a - 2c dadurch, daß die Strom-Sollwert-Korrekturgröße IKorr arithmetisch aus dem vorgegebenen zeitlichen Profil des Sollwertes berechnet wird. Hierzu ist eine Funktionsgeneratorschaltung 27 vorgesehen, die mit dem Ausgang der Stromformvorgabeschaltung 18-20 gekoppelt ist, wobei die Ausgangsgröße der Funktionsgeneratorschaltung 27 an dem weiteren Summationspunkt 24 zum Sollwert Isoll additiv hinzugefügt wird.

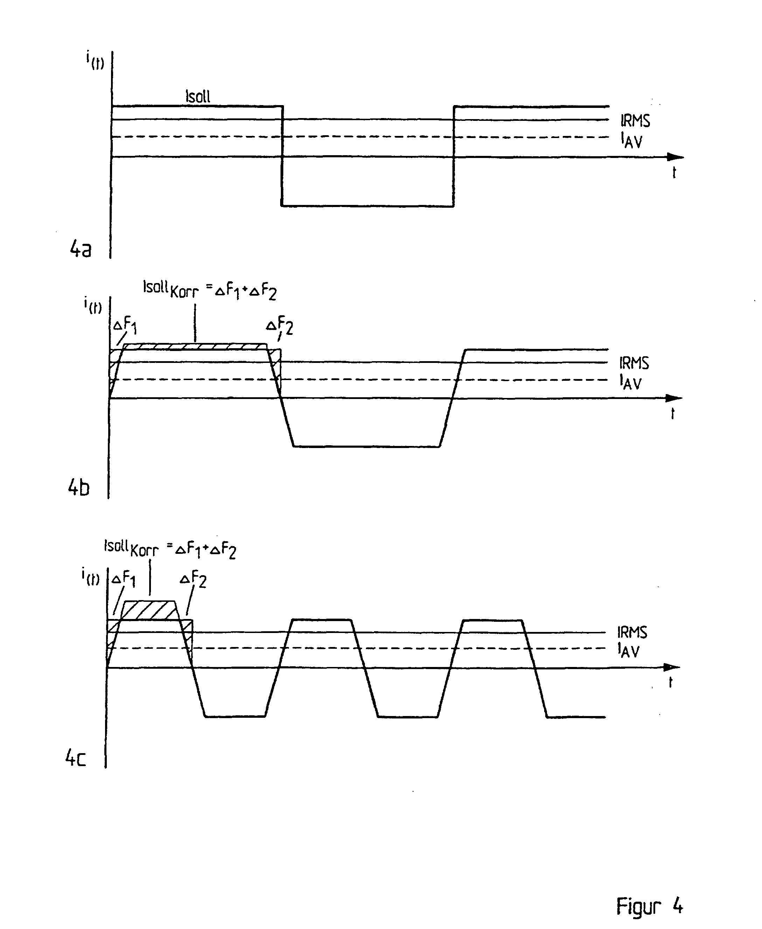

Die Funktionsweisen der in den Ausführungsbeispielen nach Fig. 2a, 2b, 2c und 3 dargestellten Lichtbogenschweißgeräte werden anhand der Stromverläufe in Fig. 4 nunmehr näher erläutert:

Die obere Abbildung in Fig. 4a zeigt den zeitlichen Verlauf des Schweißstromes für einen rechteckförmigen Stromverlauf. Die Amplitude des Stromverlaufs entspricht dem vom Sollwertgeber Isoll vorgegebenen Wert. Bei dem in Fig. 4b dargestellten trapezförmigen Stromverlauf sind die Flankensteilheiten durch die Strom-Sollwertformschaltung 18, 19, 20 so gewählt, daß sich das gewünschte Verhalten des Lichtbogenschweißgerätes, z.B. hinsichtlich der Geräusche, ergibt.

In der ersten Halbperiode des Stromverlaufs ist schraffiert diejenige Fläche eingezeichnet, um die sich der trapezförmige Stromverlauf vom Rechteckverlauf unterscheidet. Diese Flächenbereiche sind mit $\Delta F_1$ bzw. $\Delta F_2$ bezeichnet. Um diese Flächenbereiche ist der Mittelwert des Schweißstromes geringer als bei rechteckförmigem Stromverlauf.

Die Wirkungsweise der erfindungsgemäß vorgesehenen Strom-Sollwert-Korrektureinrichtung bei einer Frequenzänderung wird aus einem Vergleich der Verläufe nach Fig. 4b und Fig. 4c ersichtlich: Durch die erfindungsgemäße Korrekturschaltung wird die Amplitude des Schweißstromes angehoben, und zwar derart, daß die hinzugefügte Fläche genau den Flächenwerten

$\Delta F_1 + \Delta F_2$ entspricht. Bei höherer Frequenz (Fig. 4c) ist dementsprechend eine größere Anhebung des Wertes $I_{Soll_{Korr}}$ die Folge als bei niedriger Frequenz (Fig. 4b).

Die Festlegung der Höhe der "Aufsattelung" erfolgt in Anlehnung an den entweder arithmetisch berechneten (Fig. 3) bzw. meßtechnisch über den Istwert (Fig. 2a, b) (oder Sollwert, Fig. 2c) erfaßten und durch den Funktionsgenerator 27 berechneten bzw. durch den Mittelwertbilder 26 als IRMS oder als IAV ermittelten (Fig. 2a/2b/2c) Korrekturwert $I_{Korr}$.

Bei allen vier Ausführungsformen ist somit sichergestellt, daß das Lichtbogenschweißgerät mit einer der eigentlichen Schweißstromregelung überlagerten frequenzunabhängigen Schweißstrommittelwertregelung ausgebildet ist. Dabei ist es im Rahmen der erfindungsgemäßen Lösung enthalten, daß die Korrektur der Schweißstromsollwertvorgabe symmetrisch in beiden Halbwellen des Profils (Fig. 4b/4c) erfolgt oder aber jeweils nur in einer der beiden Halbwellen separat.

**Patentansprüche**

1. Lichtbogenschweißgerät enthaltend folgende Elemente

   - einen netzspannungsgespeisten Gleichrichter (1)
   - einen über einen Zwischenkreis (2) daran angeschlossenen Stromwandler (4), der über eine Steuereinrichtung (3a, 3b) getaktet ist,
   - einen sekundärseitigen Gleichrichter (5), dem ein Glättungsglied (7) und ein Freilaufkreis (6) zugeordnet sind,
   - einen steuerbaren Wechselrichter (12, 13), an dessen Ausgang der Schweißstrom $i_2(t)$ den Schweißprozeß (15, 16) versorgt,
   - einen die Steuereinrichtung (3a, 3b) taktenden Stromregelkreis (17), welchem der Schweißstrom ($i_1(t)$, $i_2(t)$ als Istwert und ein Sollwert zugeordnet sind, dessen zeitliches Profil von einer Stromformvorgabeschaltung (18-21) generierbar ist,

   und **gekennzeichnet durch**

   - eine Strom-Sollwertkorrektureinrichtung (23, 24,25,26), welche dem Sollwert (Isoll) eine Korrekturgröße ($I_{soll_{Korr}}$) derart additiv zuordnet, daß **durch** die Korrektur der Amplitude des Schweißstromes ($i_1(t)$ bzw. $i_2(t)$) der Mittelwert des Schweißstromes ($i_1(t)$, $i_2(t)$) unabhängig von der Wechselrichterfrequenz des Schweißstromes konstant gehalten wird.

2. Lichtbogenschweißgerät nach Anspruch 1, **dadurch gekennzeichnet, daß** der Sollwert durch die Korrekturgröße um ein solches Maß angehoben wird, daß das Flächenintegral des Strom-Sollwertprofils mit demjenigen eines Rechteckstromverlaufs in Übereinstimmung gebracht wird, dessen Amplitude dem Sollwert entspricht.

3. Lichtbogenschweißgerät nach Anspruch 1 oder 2, **dadurch gekennzeichnet, daß** zur Erzeugung der Korrekturgröße ($I_{Korr}$) ein mit der Stromformvorgabeschaltung (18-21) verbundener Funktionsgenerator (27) vorgesehen ist, welcher in Abhängigkeit von der vorgewählten Stromform und/oder der vorgewählten Wechselrichterfrequenz die Korrekturgröße ($I_{Korr}$) liefert.

4. Lichtbogenschweißgerät nach Anspruch 1 oder 2, **dadurch gekennzeichnet, daß** die Korrekturgröße aus einem weiteren Regelkreis (25) erzeugt wird, der als Sollwertvorgabe den Sollwert des Schweißstromes und als Istwert den mit einem Mittelwertbildner (26) erzeugten Mittelwert des Schweißstromes ($i_1$(t) und/oder $i_2$(t)) erhält.

5. Lichtbogenschweißgerät nach Anspruch 1 oder 2, **dadurch gekennzeichnet, daß** die Korrekturgröße aus einem weiteren Regelkreis (25) erzeugt wird, der als Sollwertvorgabe den Sollwert des Schweißstromes und als Istwert den mit einem Mittelwertbildner (26) erzeugten Mittelwert einer modifizierten Sollwertvorgabe ($I_{mod}$) am Eingang des Stromregelkreises erhält.

6. Lichtbogenschweißgerät nach Anspruch 4 oder 5, **dadurch gekennzeichnet, daß** der Mittelwertbildner (26) den arithmetischen Mittelwert IAV des Schweißstromes bildet.

7. Lichtbogenschweißgerät nach Anspruch 4 oder 5, **dadurch gekennzeichnet, daß** der Mittelwertbildner (26) den quadratischen Mittelwert des Schweißstromes IRMS bildet.

8. Lichtbogenschweißgerät nach einem der Ansprüche 3 bis 7, **dadurch gekennzeichnet**, d a ß als Eingangssignal des Mittelwertbildners (26) der Schweißstrom (i1(t)) vor dem Wechselrichter (12, 13) anliegt.

9. Lichtbogenschweißgerät nach einem der Ansprüche 3 bis 7, **dadurch gekennzeichnet, daß** als Eingangssignal des Strommittelwertbildners (26) der Schweißstrom ($i_2$(t)) hinter dem Wechselrichter (12, 13) anliegt.

10. Lichtbogenschweißgerät nach einem der Ansprüche 3 bis 7, **dadurch gekennzeichnet, daß** als Eingangssignal des Strommittelwertbildners (26) der modifizierte Sollwert ($I_{mod}$) am Eingang des Stromregelkreises (17) anliegt.

11. Lichtbogenschweißgerät nach einem der vorherigen Ansprüche 1 bis 10, **dadurch gekennzeichnet, daß** mittels der Stromformvorgabeschaltung (18-21) die Frequenz und/oder die Balance des wechselstromförmigen Schweißstrom-Sollwertes vorgebbar ist.

12. Verfahren zum Lichtbogenschweißen, bei welchem die gleichgerichtete Netzspannung über einen Zwischenkreis einem getakteten Stromwandler zugeführt wird, auf dessen Sekundärseite die gleichgerichtete und geglättete Spannung in einem steuerbaren Wechselrichter in eine den Schweißprozeß beaufschlagende Wechselspannung gewandelt wird, wobei der sekundärseitige Schweißstrom einem die Steuereinrichtung taktenden Stromregelkreis als Istwert zugeführt wird, und wobei der Stromregelkreis einen hinsichtlich seines zeitlichen Profils sowie seiner Frequenz und seiner Balance einstellbaren Strom-Sollwert erhält, **dadurch gekennzeichnet, daß** dem Strom-Sollwert jeweils eine derartige Korrekturgröße additiv zugeordnet wird, daß der Sollwert durch die Korrekturgröße um ein solches Maß angehoben wird, daß das Flächenintegral des Strom-Sollwertprofils auf den Wert bei einem rechteckförmigen Verlauf ergänzt wird, dessen Amplitude dem Sollwert entspricht.

13. Verfahren nach Anspruch 1, **dadurch gekennzeichnet, daß** es in Form eines Software-Algorithmus ausgeführt ist.

**Claims**

1. An arc welding device containing the following elements:

   - a rectifier (1) powered by line voltage

   - a current transformer (4), connected thereto via an intermediate circuit (2), which is clocked via a control unit (3a, 3b),

   - a secondary-side rectifier (5), to which a smoothing element (7) and a freewheeling circuit (6) are assigned,

   - a controllable inverter (12, 13), at whose output the welding current $i_2$(t) powers the welding process (15, 16),

   - a current control circuit (17), which clocks the control unit (3a, 3b) and to which the welding current ($i_1$(t), $i_2$(t)) is assigned as an actual value and a setpoint value, whose temporal profile may be generated by a current shaping preset circuit (18-21),

and **characterized by**

- a current setpoint value correction device (23, 24, 25, 26) which additively assigns a correction variable ($I_{sollKorr}$) to the setpoint value ($I_{soll}$) in such a way that through the correction of the amplitude of the welding current ($i_1(t)$ and/or $i_2(t)$), the average value of the welding current ($i_1(t)$, $i_2(t)$) is kept constant, independently of the inverter frequency of the welding current.

2. The arc welding device according to Claim 1, **characterized in that** the setpoint value is increased enough by the correction variable that the surface integral of the current-setpoint value profile is brought into correspondence with that of a square-wave current graph whose amplitude corresponds to the setpoint value.

3. The arc welding device according to Claim 1 or 2, **characterized in that** to generate the correction variable ($I_{Korr}$), a function generator (27) connected to the current shaping preset circuit (18-21) is provided, which provides the correction variable ($I_{Korr}$) as a function of the preselected current shape and/or the preselected inverter frequency.

4. The arc welding device according to Claim 1 or 2, **characterized in that** the correction variable is generated from a further control circuit (25), which receives the setpoint value of the welding current as the setpoint value preset and receives the average value of the welding current ($i_1(t)$ and/or $i_2(t)$), generated using an averager (26), as the actual value.

5. The arc welding device according to Claim 1 or 2, **characterized in that** the correction variable is generated from a further control circuit (25), which receives the setpoint value of the welding current as the setpoint value preset and receives the average value of a modified setpoint value preset ($I_{mod}$), generated using an averager (26), at the input of the current control circuit as the actual value.

6. The arc welding device according to Claim 4 or 5, **characterized in that** the averager (26) calculates the arithmetic mean IAV of the welding current.

7. The arc welding device according to Claim 4 or 5, **characterized in that** the averager (26) calculates the quadratic mean of the welding current IRMS.

8. The arc welding device according to one of Claims 3 through 7, **characterized in that** the welding current ($i_1(t)$) before the inverter (12, 13) is applied as the input signal of the averager (26).

9. The arc welding device according to one of Claims 3 through 7, **characterized in that** the welding current ($i_2(t)$) after the inverter (12, 13) is applied as the input signal of the current averager (26).

10. The arc welding device according to one of Claims 3 through 7, **characterized in that** the modified setpoint value ($I_{mod}$) at the input of the current control circuit (17) is applied as the input signal of the current averager (26).

11. The arc welding device according to one of the preceding Claims 1 through 10, **characterized in that** the frequency and/or the balance of the welding current setpoint value, in the form of an AC current, may be preset using the current shaping preset circuit (18-21).

12. A method for arc welding, in which the rectified line voltage is supplied via an intermediate circuit to a clocked current transformer, on whose secondary side the rectified and smoothed voltage is converted in a controllable rectifier into an AC voltage applied to the welding process, the secondary-side welding current being supplied as an actual value to a current control circuit, which clocks the control unit, and the current control circuit receiving a current setpoint value which is settable in regard to its temporal profile and its frequency and its balance, **characterized in that** a correction variable is additively assigned in each case to the current setpoint value in such a way that the setpoint value is increased enough by the correction variable that the surface integral of the current setpoint value profile is supplemented to the value of a square-wave shaped graph whose amplitude corresponds to the setpoint value.

13. The method according to Claim 1, **characterized in that** it is implemented in the form of a software algorithm.

**Revendications**

1. Appareil de soudage à l'arc contenant les éléments suivants:

- un redresseur (1) alimenté par la tension du réseau,
- un transformateur d'intensité (4) raccordé au moyen d'un circuit intermédiaire (2) au redresseur et commandé de façon cadencé au moyen d'un dispositif de commande (3a, 3b),

- un redresseur (5) situé côté secondaire et auquel sont associé un circuit de lissage (7) et un circuit de marche à vide(6),

- un onduleur commandable (12, 13), à la sortie duquel le courant de soudage, $i_2(t)$ alimente le processus de soudage (15, 16),

- un circuit de régulation de courant (17) qui commande de façon cadencée le dispositif de commande (3a, 3b) et auquel sont associés le courant de soudage ($i_1(t),i_2(t)$) en tant que valeur de consigne et une valeur de consigne, dont le profil dans le temps peut être généré par un circuit (18-21) de prédétermination de la forme du courant,

et **caractérisé par**

- un dispositif (23, 24, 25, 26) de correction de la valeur de consigne du courant, qui associe à la valeur de consigne ($I_{soll}$), une grandeur de correction ($I_{Soll,Korr}$), de façon additive de telle sorte que sous l'effet de la correction de l'amplitude du courant de soudage ($i_1(t), i_2(t)$), la valeur moyenne du courant de soudage ($i_1(t)$ ou $i_2(t)$) est maintenue constante indépendamment de la fréquence d'onduleur du courant de soudage.

2. Appareil de soudage à l'arc selon la revendication 1, **caractérisé en ce que** la valeur de consigne est accru, par la grandeur de correction, d'une valeur telle que l'intégrale de surface du profil de valeur de consigne du courant est amenée à coïncider avec l'intégrale de surface d'une allure rectangulaire du courant, dont l'amplitude correspond à la valeur de consigne.

3. Appareil de soudage à l'arc selon la revendication 1 ou 2, **caractérisé en ce que** pour la production de la grandeur de correction ($I_{Korr}$), il est prévu un générateur de fonction (27), qui est relié au circuit (18-21) de prédétermination de la forme du courant et qui délivre la grandeur de correction ($I_{Korr}$) en fonction de la forme présélectionnée du courant et/ou de la fréquence présélectionnée de l'onduleur.

4. Appareil de soudage à l'arc selon la revendication 1 ou 2, **caractérisé en ce que** la grandeur de correction est produite par un autre circuit de régulation (25), qui reçoit, en tant que prédétermination de la valeur de consigne, la valeur de consigne du courant de soudage et, en tant que valeur réelle, la valeur moyenne, formée par un dispositif (27) de formation de la valeur moyenne, du courant de soudage ($i_1(t)$ et/ou $i_2(t)$).

5. Appareil de soudage à l'arc selon la revendication 1 ou 2, **caractérisé en ce que** la grandeur de correction est produite par un autre circuit de régulation (25), qui reçoit, en tant que prédétermination de la valeur de consigne, la valeur de consigne du courant de la prédétermination de valeur de consigne modifiée ($I_{mod}$) à l'entrée du circuit de régulation de courant.

6. Appareil de soudage à l'arc selon la revendication 4 ou 5, **caractérisé en ce que** le dispositif (26) de formation de la valeur moyenne forme la valeur moyenne arithmétique RV du courant de soudage.

7. Appareil de soudage à l'arc selon la revendication 4 ou 5, **caractérisé en ce que** le dispositif (26) de formation de la valeur moyenne forme la valeur moyenne quadratique du courant de soudage IRMS.

8. Appareil de soudage à l'arc selon l'une des revendications 3 à 7, **caractérisé en ce qu'**en tant que signal d'entrée du dispositif (26) de formation de la valeur moyenne, le courant de soudage ($i_1(t)$) en amont de l'onduleur (12, 13) est appliqué.

9. Appareil de soudage à l'arc selon l'une des revendications 3 à 7, **caractérisé en ce qu'**en tant que signal d'entrée du dispositif (26) de formation de la valeur moyenne, le courant de soudage ($i_1(t)$) en aval de l'onduleur (12, 13) est appliqué.

10. Appareil de soudage à l'arc selon l'une des revendications 3 à 7, **caractérisé en ce qu'**en tant que signal d'entrée du dispositif (26) de formation de la valeur moyenne du courant, la valeur de consigne modifiée ($I_{mod}$) est appliquée à l'entrée du circuit de régulation de courant (17).

11. Appareil de soudage à l'arc selon l'une des revendications précédentes 1 à 10, **caractérisé en ce que** la fréquence et/ou l'équilibre de la valeur de consigne du courant de soudage en forme de courant alternatif peuvent être prédéterminés au moyen du circuit (18-21) de prédétermination de la forme de courant.

12. Procédé de soudage à l'arc, selon lequel la tension redressée du réseau est envoyée par l'intermédiaire d'un circuit intermédiaire à un transformateur d'intensité commandé de façon cadencée, sur le côté secondaire duquel la tension redressée est convertie dans un onduleur commandable en une tension alternative qui charge le processus de soudage, selon lequel le courant de soudage côté secondaire est envoyé en tant que valeur réelle à un circuit de régulation de courant commandant de façon cadencée le dispositif de commande, et selon lequel le circuit de régulation de courant reçoit une valeur de consigne du courant dont le profil dans le temps ainsi que la fréquence et son équilibre sont réglables, **caractérisé en ce qu'**à la valeur de consigne du courant est associée, de façon additive, respectivement une grandeur de correction telle que la valeur de consigne est accrue, par la grandeur de correction, d'une valeur telle que l'intégrale de surface du profil de valeur de consigne du courant est complétée, dans le cas d'une allure de forme rectangulaire, à une valeur, dont l'amplitude correspond à la valeur de consigne.

13. Procédé selon la revendication 1, **caractérisé en ce qu'**il est mis en oeuvre sous la forme d'un algorithme logiciel.

Figur 1

Figur 2a

Isoll

24

PI

25

Stromregler
IAV/IRMS

IKorr

Multiplikation

Isoll Korr

23

X

Imod

22

PI

17

Stromregler
i(t)

i1(t)

Netz

1

3-6

Inverter

AC-Frequenz-
Generator

AC-Frequenz

AC-Balance

18

21

A

D

20

AC-Stromform

i2(t)

i1(t)

7

Aussteuerlogik

19

12-13

AC-Wechselrichter

IAV
IRMS

$$I_{AV} = \frac{1}{T} \int i_{(t)} * dt$$

26

$$IRMS = \sqrt{\frac{1}{T} \int i^2_{(t)}} * dt$$

$$i_{(t)} = i1_{(t)} \text{ oder } i2_{(t)}$$

i2(t)

16

15

Figur 2b

Figur 2c

EP 1 142 665 B1

Isoll

24

IKorr

PI

Stromregler
IAV/IRMS

25

Isoll Korr

Multiplikation

23

Imod

22

PI

Stromregler
i(t)

17

i1(t)

i2(t)

Netz

1

3-6

Inverter

i1(t)

7

12-13

AC-Wechselrichter

AC-Frequenz

AC-Balance

AC- Frequenz-
Generator

18

A

D

21

AC-Stromform

20

Aussteuerlogik

19

IAV
IRMS

$$I_{AV} = \frac{1}{T}\int i_{(t)} * dt$$

$$IRMS = \sqrt{\frac{1}{T}\int i_{(t)}^2 * dt}$$

$$i_{(t)} = i1_{(t)} \text{ oder } i2_{(t)}$$

26

Imod

i2(t)

16

15

Figur 3

Figur 4